# EUROPÄISCHE PATENTSCHRIFT

(11) **EP 2 598 733 B1**
(45) Veröffentlichungstag und Bekanntmachung des Hinweises auf die Patenterteilung: **31.05.2017**
(21) Anmeldenummer: 11732381.6
(22) Anmeldetag: 13.07.2011
(51) Int. Cl.: F02B 23/06

(54) **SELBSTZÜNDENDE BRENNKRAFTMASCHINE MIT KOLBENMULDEN MIT DRALLSTUFUNG**
COMPRESSION IGNITION TYPE ENGINE WITH PISTON BOWLS WITH SWIRL STAGING
MOTEUR À COMBUSTION À AUTOALLUMAGE AVEC PISTON DOTÉ DES CAVITÉS AVEC ETAGEMENT DU TOURBILLON

(30) Priorität: 28.07.2010 DE 102010032442
(43) Veröffentlichungstag der Anmeldung: 05.06.2013
(73) Patentinhaber: Audi AG, 85045 Ingolstadt (DE)
(72) Erfinder: GABEL, Klaus, 71634 Ludwigsburg (DE)
(86) Internationale Anmeldenummer: PCT/EP2011/003488
(87) Internationale Veröffentlichungsnummer: WO 2012/013297

(56) Entgegenhaltungen:
- EP-A1- 1 676 997
- EP-A2- 2 112 348
- DE-A1- 19 922 964
- FR-A1- 2 887 586
- JP-A- 5 106 442
- JP-A- H02 233 822
- US-B1- 6 553 960

## Beschreibung

Die Erfindung betrifft eine selbstzündende Brennkraftmaschine gemäß dem Oberbegriff des Anspruchs 1.

Selbstzündende dieselgetriebene Brennkraftmaschinen von Kraftfahrzeugen weisen im Vergleich zu benzingetriebenen Brennkraftmaschinen von Kraftfahrzeugen erheblich höhere Rußemissionen auf. Da diese Rußemissionen in beträchtlichem Umfang zur Feinstaubbelastung der Luft beitragen, werden große Anstrengungen unternommen, die Rußemissionen zu mindern. Entsprechendes gilt auch für andere Schadstoffemissionen von Brennkraftmaschinen von Kraftfahrzeugen, wie zum Beispiel für Stickoxidemissionen. Eine der Möglichkeiten zur Verringerung der Schadstoffemissionen von Brennkraftmaschinen besteht darin, die Verbrennung in den Brennräumen der Zylinder so zu beeinflussen, dass eine vollständigere Umsetzung des eingespritzten Kraftstoffs mit dem Sauerstoff der Verbrennungsluft zu Kohlendioxid und Wasserdampf gewährleistet wird. Eine vollständigere Umsetzung ist jedoch nur bei einer guten Durchmischung des Kraftstoffs und der Verbrennungsluft im Brennraum möglich. Diese Durchmischung hängt unter anderem von der Geometrie der Kolben- oder Brennraummulde ab, die gegenüber vom Injektor in der Stirnseite des Kolbens angeordnet ist.

Um die Turbulenz der Strömung der Verbrennungsluft innerhalb der Kolben- oder Brennraummulde zu erhöhen und damit die Verwirbelung des in den Brennraum injizierten Kraftstoffs zu verbessern, um so für eine bessere Verbrennung des Kraftstoffs zu sorgen, wurden bereits Brennkraftmaschinen vorgeschlagen, bei denen die Kolben- oder Brennraummulde der Kolben einen allgemein eckigen oder polygonalen Umriss bzw. Umfang aufweist. Durch diese Muldenform sollen sich in den Ecken der Kolben- oder Brennraummulde Wirbelströmungen bilden, die der Hauptströmung entgegenwirken bzw. auf andere Weise mit ihr in Wechselwirkung treten, um durch die entstehenden Turbulenzen für eine bessere Durchmischung von Verbrennungsluft und Kraftstoff zu sorgen. Aus der DE-A-2 343 023 ist bereits eine Brennkraftmaschine der eingangs genannten Art bekannt, bei der zur Verbesserung der Verteilung und Zerstäubung des eingespritzten Kraftstoffs die Kolben- oder Brennraummulde einen allgemein quadratischen Umriss mit gerundeten Ecken aufweist, während der Injektor mit vier Einspritzöffnungen versehen ist, die in Winkelabständen von 90 Grad angeordnet und so ausgerichtet sind, dass der aus den Einspritzöffnungen ausgestoßene Kraftstoff in Strömungs- oder Drallrichtung gesehen vor den gerundeten Ecken unter einem schrägen Winkel auf die Begrenzungsflächen der Kolben- oder Brennraummulde auftrifft.

Aus der Druckschrift EP 2 112 348 A2 ist ein Motor mit direkter Kraftstoffeinspritzung bekannt, umfassend einen Kolben, dessen Oberseite in einer Dachform ausgebildet ist, deren Höhe sich in Richtung einer Kolbenmittelachse in der Umfangsrichtung ändert, eine Mulde, die in einem Mittelteil der Oberseite des Kolbens vertieft ist, und einen Kraftstoffinjektor zum Einspritzen von Kraftstoff in die Mulde. Die Form einer Innenwandfläche der Mulde ist so gelegt, dass, wobei N eine natürliche Zahl von 2 oder mehr ist, wenn die Mulde durch die Innenwandfläche der Mulde und N Halbebenen, die sich radial von der Kolbenmittelachse erstrecken und gleiche Einschlusswinkel aufweisen, in N virtuelle Muldenabschnitte unterteilt ist. Weiterhin ist die Anzahl N der virtuellen Muldenabschnitte so gelegt, dass sie gleich der Anzahl von Kraftstoffeinspritzachsen des Kraftstoffinjektors ist, wobei, bei Betrachtung in Richtung der Kolbenmittelachse, die Halbierende des Einschlusswinkels mit der Kraftstoffeinspritzachse zusammenfällt, wobei ein Kraftstoffeinsprühwinkel der Kraftstoffeinspritzachsen mit dem Einschlusswinkel zusammenfällt.

Weitere Brennkraftmaschinen gehen aus den Druckschriften JP 5-106442 A sowie JP 2-233822 A hervor.

Ausgehend hiervon liegt der Erfindung die Aufgabe zugrunde, eine Brennkraftmaschine der eingangs genannten Art dahingehend zu verbessern, dass sich die Emissionen und insbesondere die Rußemissionen der Brennkraftmaschine weiter reduzieren lassen.

Diese Aufgabe wird erfindungsgemäß dadurch gelöst, dass die Einspritzöffnungen des Injektors unterschiedliche Öffnungsquerschnitte aufweisen, und dass die Einspritzöffnungen mit den unterschiedlichen Öffnungsquerschnitten auf Bereiche der Brennraummulde mit unterschiedlichen Strömungsquerschnitten gerichtet sind, wobei die Einspritzöffnungen mit den unterschiedlichen Öffnungsquerschnitten auf Bereiche der Kolbenmulde gerichtet sind, in denen Abstände zwischen einem äußeren Umfang der Kolbenmulde und einer Längsmittelachse des Zylinders und des Kolbens unterschiedlich groß sind.

Der Erfindung liegt der Gedanke zugrunde, dass die unterschiedlichen Öffnungsquerschnitte der Einspritzöffnungen des Injektors bei gleichem Raildruck und bei gleicher Einspritzdauer unterschiedliche eingespritzte Massen mit unterschiedlichen Tropfenspektren und Verdämpfungsraten erzeugen. Dadurch weisen die Einspritzstrahlen jedoch auch einen unterschiedlichen Drallbedarf auf, dem durch die Ausrichtung der Einspritzöffnungen bzw. Einspritzstrahlen auf Bereiche mit unterschiedlichen Strömungsquerschnitten und damit unterschiedlichen Strömungsgeschwindigkeiten der durch die Kolbenmulde strömenden Verbrennungsluft Rechnung getragen wird.

Vorzugsweise wird die Ausrichtung der Einspritzöffnungen so gewählt, dass die Einspritzstrahlen mit höherem Drallbedarf, das heißt die Einspritzstrahlen aus den Einspritzöffnungen mit den kleineren Öffnungsquerschnitten, jeweils in eine Richtung gelenkt werden, in der die Kolben- oder Brennraummulde einen kleineren Strömungsquerschnitt aufweist und daher die Strömungsgeschwindigkeit der Verbrennungsluft in der Mulde größer ist, während Einspritzstrahlen mit niedrigerem Drallbedarf, das heißt die Einspritzstrahlen aus den Einspritzöffnungen mit den größeren Öffnungsquerschnitten, jeweils in eine Richtung gelenkt werden, in der die Kolben- oder Brennraummulde einen größeren Strömungsquerschnitt aufweist und demzufolge die Strömungsgeschwindigkeit der Verbrennungsluft in der Mulde kleiner ist. Der Drallbedarf der Einspritzstrahlen hängt von der Eindringtiefe und von der Verdunstungsgeschwindigkeit der Einspritzstrahlen ab und ist umso kleiner, je größer die Eindringtiefe ist bzw. je länger die Verdunstung dauert. Die Eindringtiefe des Einspritzstrahls und die zu seiner Verdunstung erforderliche Zeit wiederum nehmen mit zunehmendem Öffnungsquerschnitt der Einspritzöffnung zu.

Durch die erfindungsgemäße Maßnahme lassen sich die Vorteile von Einspritzöffnungen mit größeren Öffnungsquerschnitten bei Volllast mit den Vorteilen von Einspritzöffnungen mit kleineren Öffnungsquerschnitten bei Teillast kombinieren. Weiter kann die Luft im Brennraum besser erfasst und mit dem Kraftstoff vermischt werden, was zu einer schnelleren Verbrennung mit geringeren Stickoxid- und Rußemissionen führt.

Um die unterschiedlichen Strömungsquerschnitte innerhalb der Kolben- oder Brennraummulde zu realisieren, kann die Mulde so geformt werden, dass die äußeren Umfangsflächen der Mulde, die den Einspritzöffnungen mit den unterschiedlichen Öffnungsquerschnitten jeweils gegenüberliegen, unterschiedliche radiale Abstände vom Injektor und/oder unterschiedliche Tiefen aufweisen. Vorzugsweise sind die Abstände und/oder Tiefen im Bereich der Einspritzöffnungen mit den größeren Öffnungsquerschnitten größer, so dass dort entsprechend größere Strömungsquerschnitte vorhanden sind, während sie im Bereich der Einspritzöffnungen mit den kleineren Öffnungsquerschnitten kleiner sind, so dass dort entsprechend kleinere Strömungsquerschnitte vorhanden sind.

Eine weitere bevorzugte Ausgestaltung der Erfindung sieht vor, dass der Injektor mehrere Paare von Einspritzöffnungen aufweist, die jeweils eine Einspritzöffnung mit größerem Öffnungsquerschnitt und eine Einspritzöffnung mit kleinerem Öffnungsquerschnitt umfassen. Die Einspritzöffnungen mit dem größeren Öffnungsquerschnitt und die Einspritzöffnungen mit dem kleineren Öffnungsquerschnitt wechseln sich in Umfangsrichtung des Zylinders und des Kolbens ab, wobei die Einspritzöffnungen mit dem größeren Öffnungsquerschnitt auf Bereiche der Kolbenmulde mit einem größeren Strömungsquerschnitt und die Einspritzöffnungen mit dem kleineren Öffnungsquerschnitt auf Bereiche der Kolbenmulde mit einem kleineren Strömungsquerschnitt gerichtet sind. Benachbarte gleichgroße Einspritzöffnungen weisen dabei vorzugsweise dieselben Winkelabstände auf, wie benachbarte Bereiche der Kolben- oder Brennraummulde, in denen der Strömungsquerschnitt ein Maximum bzw. ein Minimum besitzen. Vorteilhaft weist die Kolben- oder Brennraumulde mehrere diametrale Symmetrieebenen auf, deren Anzahl der Anzahl der Paare von Einspritzöffnungen entspricht und zweckmäßig vier beträgt. Die Strömungsquerschnitte der Kolben- oder Brennraummulde besitzen in diesen Symmetrieebenen ein Maximum oder Minimum und werden von dort bis zur benachbarten Symmetrieebene wieder größer bzw. kleiner.

Vorteilhaft sind sämtliche Einspritzöffnungen des Injektors in einer Ebene angeordnet, die senkrecht zur Längsmittelachse des Zylinders und des Kolbens ist, und weisen schräg nach unten in Richtung der Kolben- oder Brennraummulde, wobei sie auf gegenüberliegende Umfangsflächen der Mulde gerichtet sind.

Eine besonders bevorzugte Ausgestaltung der Erfindung sieht vor, dass die Kolben- oder Brennraummulde einen Umriss oder Umfang aufweist, der allgemein einem abgerundeten Polygon mit gerundeten Ecken und zweckmäßig einem abgerundeten Quadrat entspricht. Vorzugsweise sind auch die Seiten des Polygons bzw. Quadrats leicht konvex nach außen gekrümmt, wobei jedoch die Krümmungsradien in den Bereichen mit größeren Strömungsquerschnitten, d.h. an den Ecken des abgerundeten Polygons bzw. Quadrats, kleiner sind als in den Bereichen mit kleineren Strömungsquerschnitten, d.h. an den Seiten des abgerundeten Polygons bzw. Quadrats.

Vorteilhaft weisen die äußeren Umfangsflächen der Kolben- oder Brennraummulde keine Unstetigkeiten auf, so dass innerhalb der Mulde eine Ablösung der Luftströmung von den Umfangsflächen und damit die Bildung von Sekundärwirbeln weitestgehend vermieden werden kann.

Gemäß einer weiteren vorteilhaften Ausgestaltung der Erfindung besitzt die Kolben- oder Brennraummulde einen schüsselförmigen Querschnitt mit einem erweiterten Bauchteil und einem verengten Halsteil, der zwischen dem erweiterten Bauchteil und einer geringfügig erweiterten Einmündung der Brennraummulde in eine ebene Stirnfläche des Kolbens angeordnet ist. In der Mitte der Kolben- oder Brennraummulde befindet sich vorteilhaft ein nach oben über einen Boden der Mulde überstehender, allgemein pyramidenförmiger Vorsprung mit gerundeten Ecken und einer gerundeten Spitze, dessen Umfangsflächen zusammen mit den äußeren Umfangsflächen der Mulde die unterschiedlichen Strömungsquerschnitte innerhalb derselben begrenzen.

Die Umfangsflächen des allgemein pyramidenförmigen Vorsprungs können vorteilhaft parallel zu den Seiten des allgemein polygonalen Umfangs der Kolben- oder Brennraummulde verlaufen, jedoch ist es auch möglich, den Vorsprung so um die Längsmittelachse des Zylinders und des Kolbens zu drehen, dass seine gerundeten Ecken den Seiten des allgemein polygonalen Umfangs der Mulde gegenüberliegen.

Im Folgenden wird die Erfindung anhand einiger in der Zeichnung dargestellter Ausführungsbeispiele näher erläutert. Es zeigen
Fig. 1 eine vereinfachte Querschnittsansicht eines Zylinders eines Kolbens und eines Injektors einer erfindungsgemäßen Brennkraftmaschine;
Fig. 2 überlagerte Querschnittsansichten einer Kolbenmulde des Kolbens in zwei unterschiedlichen Schnittebenen;
Fig. 3a und 3b Draufsichten auf eine obere Stirnseite des Kolbens mit der Kolbenmulde, wobei der Injektor zur Erläuterung zweier bevorzugter Ausrichtungen von Einspritzöffnungen in Bezug zur Kolbenmulde ebenfalls dargestellt ist;
Fig. 4 überlagerte Querschnittsansichten einer alternativen Kolbenmulde in zwei unterschiedlichen Schnittebenen, entsprechend Fig. 2;
Fig. 5 eine Draufsicht auf die obere Stirnseite des Kolbens mit der Kolbenmulde aus Fig. 4, wobei der Injektor ebenfalls dargestellt ist;
Fig. 6 eine Querschnittsansicht einer anderen alternativen Kolbenmulde des Kolbens;
Fig. 7 eine andere Querschnittsansicht der Kolbenmulde aus Fig. 6;
Fig. 8 eine Draufsicht auf die untere Stirnseite des Kolbens mit der Kolbenmulde aus Fig. 6;
Fig. 9 eine perspektivische Ansicht der oberen Stirnseite des Kolbens mit der Kolbenmulde aus Fig. 6;
Fig. 10 eine Seitenansicht einer weiteren alternativen Kolbenmulde;
Fig. 11 eine Schnittansicht entlang der Linie XI - XI der Fig. 10;
Fig. 12 eine Seitenansicht einer noch weiteren alternativen Kolbenmulde des Kolbens;
Fig. 13 eine Schnittansicht entlang der Linie XIII - XIII der Fig. 12;
Fig. 14 eine vergrößerte Seitenansicht des unteren Endes des Injektors.

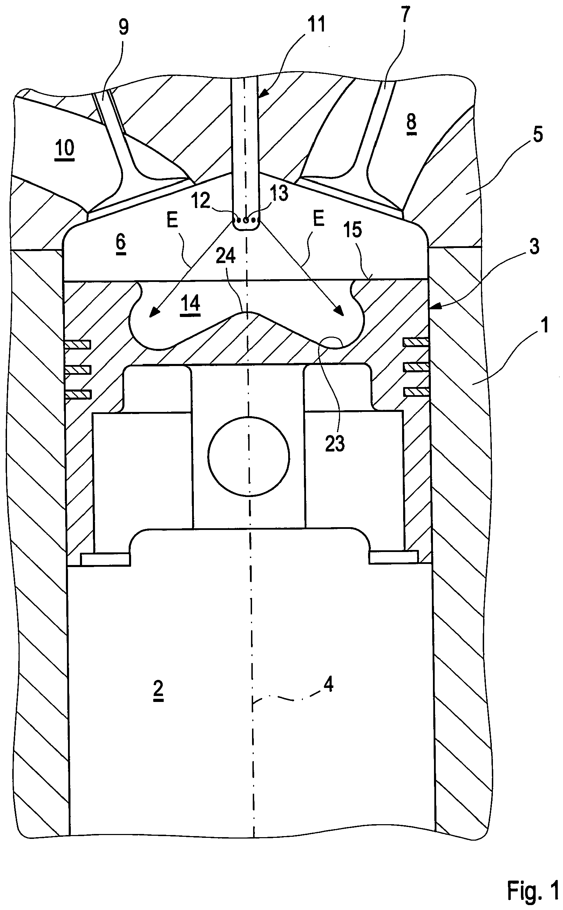

In dem in Fig. 1 dargestellten, in einem Zylinderkurbelgehäuse 1 einer DieselBrennkraftmaschine ausgesparten Zylinder 2 ist ein Kolben 3 entlang einer Längsmittelachse 4 des Zylinders 2 und des Kolbens 3 hin und her beweglich.

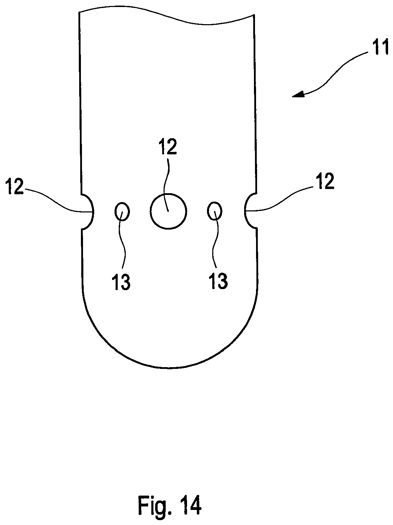

Der Zylinder 2 und der Kolben 3 begrenzen zusammen mit einem Zylinderkopf 5 der Brennkraftmaschine einen Brennraum 6. Ein durch ein Einlassventil 7 verschließbarer Einlasskanal 8 dient zur Zufuhr von Verbrennungsluft in den Brennraum 6. Ein durch ein Auslassventil 9 verschließbarer Auslasskanal 10 dient zur Abfuhr von Verbrennungsgasen aus dem Brennraum 6. Zur Einspritzung von Diesel-Kraftstoff in den Brennraum 6 dient ein Injektor 11, der in eine zur Längsmittelachse 4 koaxiale Bohrung des Zylinderkopfs 5 eingesetzt ist und von oben her in den Brennraum 6 ragt. Der Injektor 11 weist an seinem freien Ende insgesamt acht Einspritzöffnungen 12, 13 auf, die um die Längsmittelachse 4 herum in Winkelabständen von 45 Grad in einer zur Längsmittelachse 4 senkrechten Ebene angeordnet sind. Die im Querschnitt kreisförmigen, schräg nach unten gerichteten Einspritzöffnungen 12, 13 weisen paarweise unterschiedliche Öffnungsdurchmesser auf, wie am besten in Fig. 14 dargestellt, wobei in Umfangsrichtung des Injektors 11 stets eine Einspritzöffnung 13 mit kleinerem Durchmesser zwischen zwei Einspritzöffnungen 12 mit größerem Durchmesser angeordnet ist, und umgekehrt.

Der Kolben 3 weist in seinem dem Brennraum 6 zugewandten oberen Stirnende eine nach oben offene Kolbenmulde 14 auf, die von einer zum Zylinder 2 benachbarten allgemein ringförmigen ebenen Stirnfläche 15 des Kolbens 3 umgeben ist.

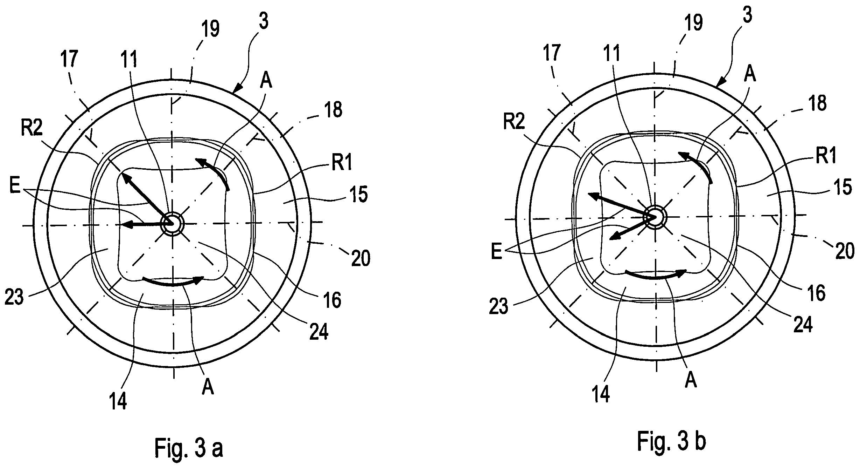

Die in den Figuren 1 bis 5 und 10 bis 13 dargestellten Kolbenmulden 14 weisen einen Umriss oder Umfang 16 auf, der in Bezug zur Längsmittelachse 4 des Zylinders 2 und des Kolbens 3 nicht-rotationssymmetrisch ist, sondern in Draufsicht allgemein die Form eines Quadrats mit vier gleichlangen konvex nach außen gekrümmten Seiten mit einem größeren Krümmungsradius R1 und vier gerundeten Ecken mit einem kleineren Krümmungsradius R2 besitzt. In Draufsicht ist die Kolbenmulde 14 spiegelsymmetrisch in Bezug zu vier in Winkelabständen von 45 Grad angeordneten Symmetrieebenen 17, 18, 19, 20, von denen zwei 17, 18 durch die Längsmittelachse 4 und die Mitten der gerundeten Ecken des Quadrats und zwei 19, 20 durch die Längsmittelachse 4 und die Mitten der Seiten des Quadrats verlaufen, wie am besten in den Figuren 3a, 3b sowie 11 und 13 dargestellt.

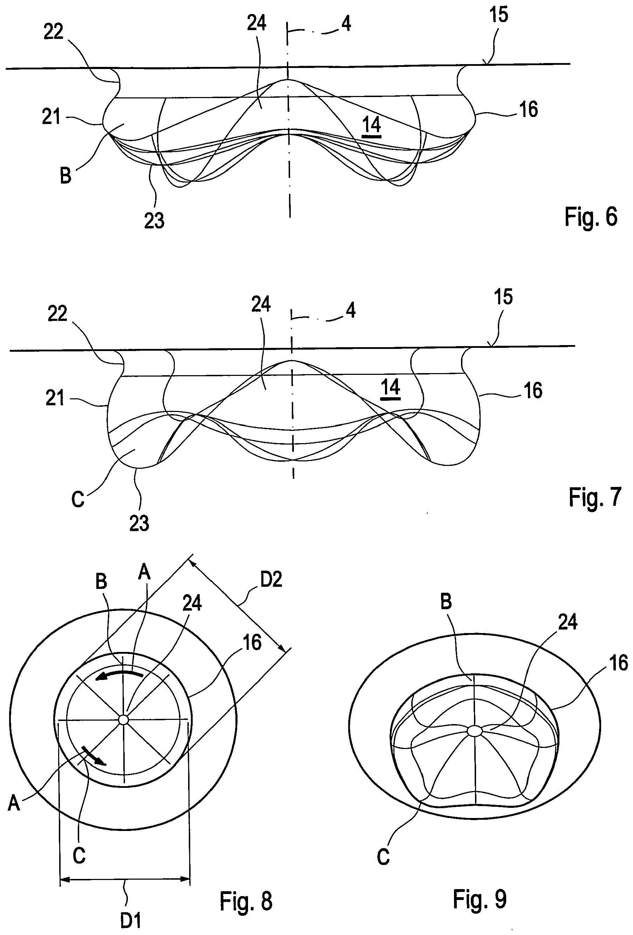

Die in den Figuren 6 bis 9 dargestellten Kolbenmulden 14 weisen hingegen einen kreisförmigen Umriss oder Umfang 16 auf, der in Bezug zur Längsmittelachse 4 des Zylinders 2 und des Kolbens 3 rotationssymmetrisch ist.

Wie am besten in den Figuren 1, 2, 4, 6, 7, 10 und 12 dargestellt, weisen alle Kolbenmulden 14 einen allgemein schüsselförmigen Querschnitt auf, wobei ihr äußerer Umfang 16 einen erweiterten Bauchteil 21 und einen gegenüber dem Bauteil 21 leicht verengten Halsteil 22 besitzt, der oberhalb des Bauchteils 21 zwischen diesem und der Stirnfläche 15 des Kolbens 3 angeordnet ist und sich zur Stirnfläche 15 hin etwas erweitert.

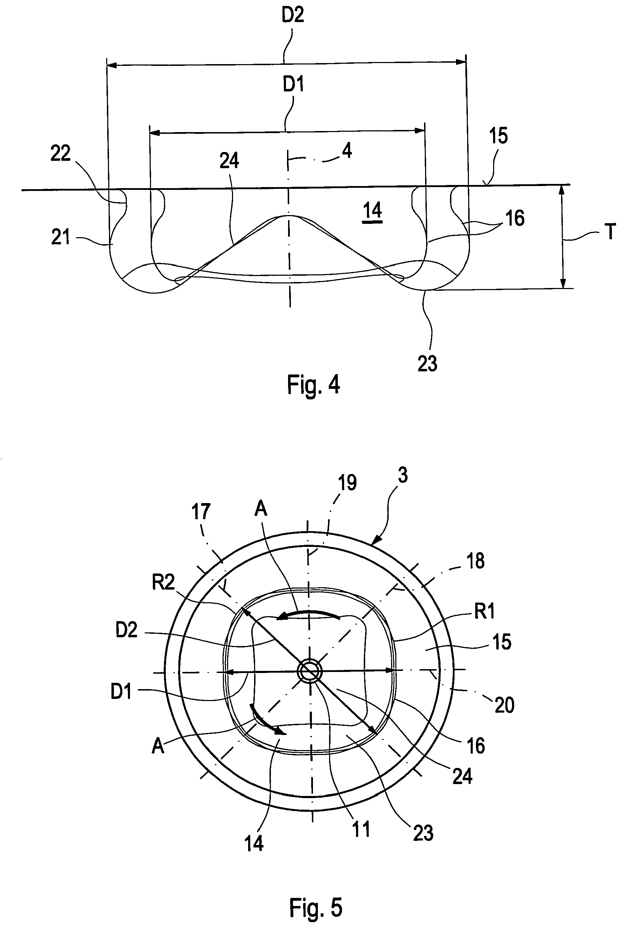

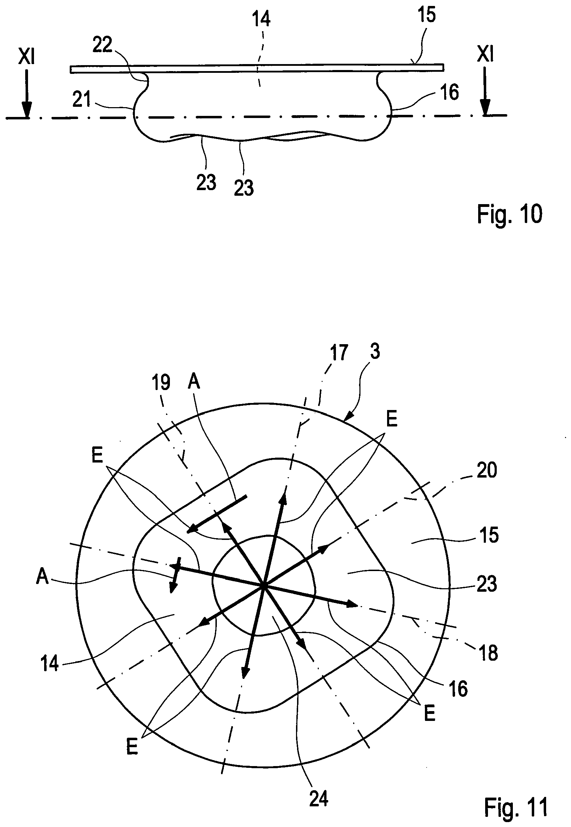

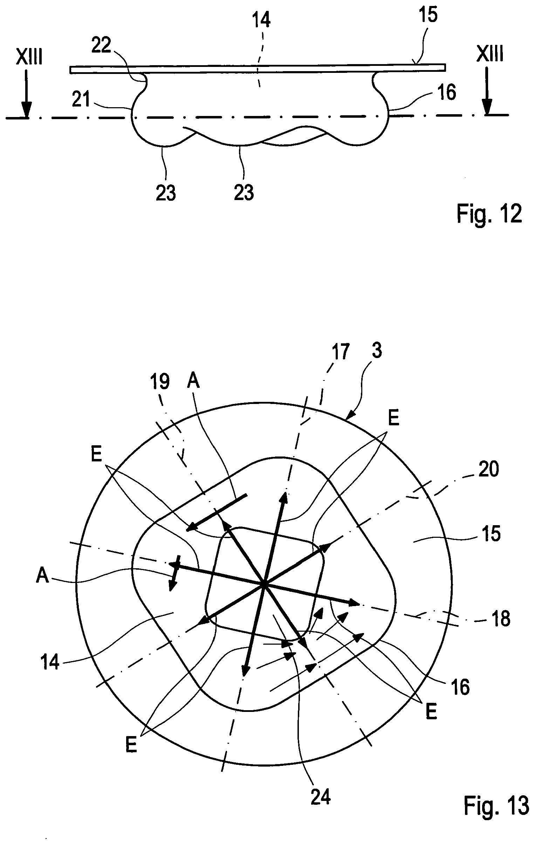

Sämtliche Kolbenmulden 14 weisen in ihrer Mitte einen nach oben über einen Boden 23 der Kolbenmulde 14 überstehenden Vorsprung 24 auf, der allgemein die Form einer quadratischen Pyramide mit gerundeten Ecken und einer gerundeten Spitze besitzt, wie am besten in den Figuren 1, 2, 4, 6 und 7 dargestellt. Die Spitze der Pyramide ist unterhalb des Injektors 11 auf der Längsmittelachse 4 des Zylinders 2 und des Kolbens 3 angeordnet. Die vier Seiten der Pyramide zwischen deren gerundeten Ecken können allgemein eben (Fig. 13), leicht konvex nach außen in Richtung des Umfangs 16 der Kolbenmulde gebogen (Fig. 11) oder leicht konkav nach innen in Richtung der Längsmittelachse 4 gekrümmt (Fig. 3a, 3b und 5) sein. Die Seiten und die Ecken der Pyramide können je nach Tiefe und Querschnittsabmessungen der Kolbenmulde 14 eine steilere (Fig. 7) oder flachere (Fig.6) Neigung aufweisen. Die Pyramide kann so ausgerichtet sein, dass ihre gerundeten Ecken spiegelsymmetrisch zu den Symmetrieebenen 17, 18 durch die Mitten der gerundeten Ecken der Kolbenmulde 14 sind, wie in Fig. 11 dargestellt. Alternativ kann die Pyramide jedoch auch so ausgerichtet sein, dass ihre gerundeten Ecken spiegelsymmetrisch zu den Symmetrieebenen 19, 20 durch die Mitten der Seiten der Kolbenmulde 14 sind, wie in Fig. 13 dargestellt.

Die Kolbenmulde 14 weist infolge ihres allgemein quadratischen Umrisses in Umfangsrichtung des Zylinders 2 und des Kolbens 3 gesehen unterschiedliche Querschnittsabmessungen bzw. Durchmesser D auf, die zwischen einem kleinsten Durchmesser D1 auf den Symmetrieebenen 19, 20 durch die Mitten der Seiten der Kolbenmulde 14 und einem größten Durchmesser D2 auf den Symmetrieebenen 17, 18 durch die Mitten der gerundeten Ecken der Kolbenmulde 14 variieren und jeweils zwischen benachbarten Symmetrieebenen stetig zunehmen bzw. abnehmen. Der Durchmesser D an einer bestimmten Winkelposition ist der größte Abstand zwischen der Längsmittelachse 4 und dem Umfang 16 an dieser Winkelposition.

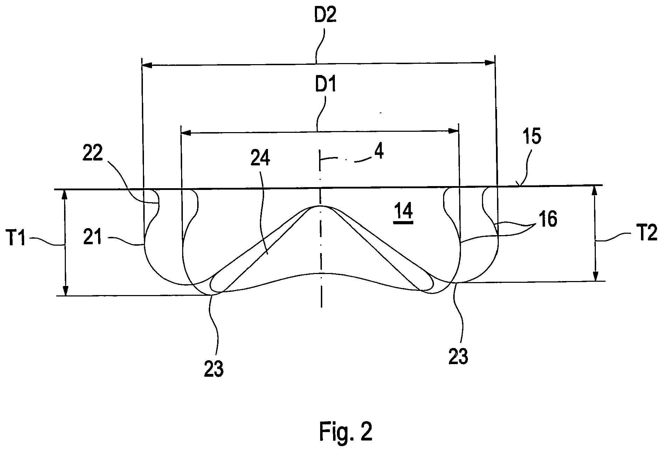

Die Kolbenmulde 14 kann entlang ihres gesamten Umfangs dieselbe Tiefe T aufweisen. Alternativ kann die Kolbenmulde 14 in Umfangsrichtung des Zylinders 2 und des Kolbens 3 variierenden Tiefen T aufweisen, wie in den Figuren 2 sowie 6 und 7 dargestellt, wo sich flachere Bereiche B und tiefere Bereiche C abwechseln. Bei der in Fig. 2 dargestellten Kolbenmulde 14 weist die Tiefe T im Bereich der Durchmesser D1 bzw. auf den Symmetrieebenen 19, 20 ein Maximum T1 und im Bereich der Durchmesser D2 bzw. auf den Symmetrieebenen 17, 18 ein Minimum T2 auf.

Infolge der unterschiedlichen Querschnittsabmessungen bzw. Durchmesser D und/oder der unterschiedlichen Tiefen T der Kolbenmulde 14 weist diese zwischen dem pyramidenförmigen Vorsprung 24 und ihrem äußeren Umfang 16 variierende Strömungsquerschnitte auf. Bei den Kolbenmulden in den Figuren 1 bis 5 und 10 bis 13 liegen die Maxima der Strömungsquerschnitte jeweils in den Symmetrieebenen 17, 18, während die Minima jeweils in den Symmetrieebenen 19, 20 liegen. Dadurch verändert sich auch die Strömungsgeschwindigkeit der mit einem Drall durch den Einlasskanal 8 in den Brennraum 6 zugeführten Verbrennungsluft, die in der Zeichnung in Richtung der Pfeile A, d.h. entgegen dem Uhrzeigersinn, um den pyramidenförmigen Vorsprung 24 herum durch die Kolbenmulde 14 strömt, wie durch die unterschiedlich langen Pfeile A dargestellt. Da der äußere Umfang 16 der Kolbenmulde 14 in Umfangsrichtung des Kolbens 3 gesehen keine Unstetigkeiten aufweist, werden dabei in der Kolbenmulde 14 im Wesentlichen keine sekundären Wirbelströmungen erzeugt.

Wie am besten in den Figuren 3a und 3b durch zwei unterschiedlich lange Pfeile E und in den Figuren 11 und 13 durch acht Pfeile E mit zwei unterschiedlichen Längen dargestellt, sind die verschieden großen Einspritzöffnungen 12, 13 des Injektors 11 auf Bereiche der Kolbenmulde 14 gerichtet, die unterschiedliche Strömungsquerschnitte besitzen.

Bei der in Fig. 3a dargestellten Kolbenmulde 14 sind die Einspritzöffnungen 12, 13 so angeordnet, dass die aus den größeren Einspritzöffnungen 12 austretenden, durch den längeren Pfeil E gekennzeichneten Einspritzstrahlen mit dem geringeren Drallbedarf in einer der Symmetrieebenen 17, 18 durch die Mitten der gerundeten Ecken der Kolbenmulde 14 liegen und somit auf Bereiche der Kolbenmulde 14 mit den größten Strömungsquerschnitten und damit mit den kleinsten Strömungsgeschwindigkeiten gerichtet sind. Die aus den kleineren Einspritzöffnungen 13 austretenden, durch den kürzeren Pfeil E gekennzeichneten Einspritzstrahlen mit dem größeren Drallbedarf liegen in einer der Symmetrieebenen 19, 20 durch die Mitten der Seiten der Kolbenmulde 14 und sind somit auf Bereiche der Brennraummulde mit den kleinsten Strömungsquerschnitten und damit mit den größten Strömungsgeschwindigkeiten gerichtet. Sämtliche Einspritzstrahlen sind in einer Draufsicht auf den Kolben 3 senkrecht zu der gegenüberliegenden Umfangsfläche der Kolbenmulde 14 ausgerichtet.

Entsprechendes gilt auch für die in den Figuren 11 und 13 dargestellten Kolbenmulden 14, in denen Einspritzstrahlen aus den großen bzw. kleinen Einspritzöffnungen 12, 13 ebenfalls durch unterschiedlich lange Pfeile E und die Strömungsgeschwindigkeiten durch unterschiedlich lange Pfeile A gekennzeichnet sind.

Bei der in Fig. 3b dargestellten Kolbenmulde 14 sind die Einspritzöffnungen 12, 13 hingegen so angeordnet, dass sowohl die aus den größeren Einspritzöffnungen 12 austretenden Einspritzstrahlen (längerer Pfeil E) als auch die aus den kleineren Einspritzöffnungen 13 austretenden Einspritzstrahlen (kürzerer Pfeil E) spitze Winkel mit den beiden benachbarten Symmetrieebenen 17, 20; 20, 18 einschließen. Diese Winkel betragen bei der Kolbenmulde 14 in Fig. 3b jeweils 22,5 Grad, so dass sämtliche Einspritzstrahlen in der in Fig. 3b dargestellten Draufsicht auf den Kolben 3 unter einem Winkel von 67,5 Grad zu der gegenüberliegenden Umfangsfläche der Mulde 14 ausgerichtet sind.

3D-Simulationen haben gezeigt, dass sich mit den in Fig. 3a und Fig. 3b dargestellten Anordnungen die Schadstoffemissionen und insbesondere die Rußemissionen der Brennkraftmaschine besonders stark reduzieren lassen.

## Patentansprüche

1. Selbstzündende Brennkraftmaschine mit mindestens einem Zylinder (2) und einem im Zylinder (2) hin und her beweglichen Kolben (3), der mit dem Zylinder (2) einen Brennraum (6) begrenzt und eine dem Brennraum (2) zugewandte Kolbenmulde (14) aufweist, die in einer Umfangsrichtung des Zylinders (2) und des Kolbens (3) variierende Strömungsquerschnitte aufweist, sowie mit einem mittig über der Kolbenmulde (14) angeordneten Injektor (11) zum Einspritzen von Kraftstoff in die Kolbenmulde (14), der eine Mehrzahl von Einspritzöffnungen (12,13) aufweist, wobei mindestens ein Teil der Einspritzöffnungen (12, 13) unterschiedliche Öffnungsquerschnitte aufweist, und dass die Einspritzöffnungen (12, 13) mit den unterschiedlichen Öffnungsquerschnitten auf Bereiche der Brennraummulde (14) mit unterschiedlichen Strömungsquerschnitten gerichtet sind, **dadurch gekennzeichnet, dass** die Einspritzöffnungen (12, 13) mit den unterschiedlichen Öffnungsquerschnitten auf Bereiche der Kolbenmulde (14) gerichtet sind, in denen Abstände (D1, D2) zwischen einem äußeren Umfang (16) der Kolbenmulde (14) und einer Längsmittelachse (4) des Zylinders (2) und des Kolbens (4) unterschiedlich groß sind.

2. Selbstzündende Brennkraftmaschine nach Anspruch 1, **dadurch gekennzeichnet, dass** die Einspritzöffnungen (12, 13) mit den unterschiedlichen Öffnungsquerschnitten auf Bereiche der Kolbenmulde (14) gerichtet sind, in denen Tiefen (T1, T2) der Kolbenmulde (14) unterschiedlich groß sind.

3. Selbstzündende Brennkraftmaschine nach einem der vorangehenden Ansprüche, **dadurch gekennzeichnet, dass** der Injektor (11) mehrere Paare von Einspritzöffnungen (12, 13) aufweist, die jeweils eine Einspritzöffnung (12) mit größerem Öffnungsquerschnitt und eine Einspritzöffnung (13) mit kleinerem Öffnungsquerschnitt umfassen, wobei sich die Einspritzöffnungen (12) mit dem größeren Öffnungsquerschnitt und die Einspritzöffnungen (13) mit dem kleineren Öffnungsquerschnitt abwechseln.

4. Selbstzündende Brennkraftmaschine nach Anspruch 3, **dadurch gekennzeichnet, dass** die Einspritzöffnungen (12) mit dem größeren Öffnungsquerschnitt auf Bereiche der Kolbenmulde (14) mit einem größeren Strömungsquerschnitt gerichtet sind, und dass die Einspritzöffnungen (13) mit dem kleineren Öffnungsquerschnitt auf Bereiche der Kolbenmulde (14) mit einem kleineren Strömungsquerschnitt gerichtet sind.

5. Selbstzündende Brennkraftmaschine nach einem der vorangehenden Ansprüche, **dadurch gekennzeichnet, dass** die Kolbenmulde (14) in Bezug zu einer Längsmittelachse (4) des Zylinders (2) und des Kolbens (3) nicht rotationssymmetrisch ist.

6. Selbstzündende Brennkraftmaschine nach einem der vorangehenden Ansprüche, **dadurch gekennzeichnet, dass** die Kolbenmulde (14) mehrere Symmetrieebenen (17, 18, 19, 20) aufweist, deren Anzahl der Anzahl der Paare von Einspritzöffnungen (12, 13) entspricht, und dass die Strömungsquerschnitte der Kolbenmulde (14) jeweils in den Symmetrieebenen (17, 18, 19, 20) ein Maximum oder Minimum aufweisen und von dort bis zur benachbarten Symmetrieebene (19, 20, 17, 18,) abnehmen bzw. zunehmen.

7. Selbstzündende Brennkraftmaschine nach einem der vorangehenden Ansprüche, **dadurch gekennzeichnet, dass** die Kolbenmulde (14) einen konvex gekrümmten äußeren Umfang (16) mit unterschiedlichen Krümmungsradien (R1, R2) aufweist, wobei die Krümmungsradien (R2) in den Bereichen größeren Strömungsquerschnitten kleiner sind als die Krümmungsradien (R1) in Bereichen mit kleineren Strömungsquerschnitten.

8. Selbstzündende Brennkraftmaschine nach einem der vorangehenden Ansprüche, **dadurch gekennzeichnet, dass** die Kolbenmulde (14) einen äußeren Umfang (16) ohne Unstetigkeiten aufweist.

9. Selbstzündende Brennkraftmaschine nach einem der vorangehenden Ansprüche, **dadurch gekennzeichnet, dass** die Kolbenmulde (14) einen schüsselförmigen Querschnitt mit einem erweiterten Bauchteil (21) und einem verengten Halsteil (22) zwischen dem Bauchteil (21) und einer Einmündung der Kolbenmulde (14) in eine ebene Stirnfläche (15) des Kolbens (3) aufweist.

10. Selbstzündende Brennkraftmaschine nach einem der vorangehenden Ansprüche, **gekennzeichnet durch** einen in der Mitte der Kolbenmulde (14) nach oben über einen Boden (23) der Kolbenmulde (14) überstehenden allgemein pyramidenförmigen Vorsprung (24) mit gerundeten Ecken und einer gerundeten Spitze.

## Claims

1. Self-igniting internal combustion engine with at least one cylinder (2) and a piston (3) that can be moved back and forth in the cylinder (2), said piston, with the cylinder (2), bordering a combustion chamber (6) and having a piston cavity (14) facing the combustion chamber (2) which has varying flow cross-sections in a circumferential direction of the cylinder (2) and the piston (3), and an injector (11) centred above the piston cavity (14) for injecting fuel into the piston cavity (14) which has a plurality of injection openings (12, 13), wherein at least a part of the injection openings (12, 13) has different opening cross-sections, and the injection openings (12,13) are directed with the different opening cross-sections at regions of the combustion bowl (14) with different flow cross-sections, **characterised in that** the injection openings (12, 13) are directed with the different opening cross-sections at regions of the piston cavity (14) in which distances (D1, D2) between an outer circumference (16) of the piston cavity (14) and a longitudinal centre line (4) of the cylinder (2) and the piston (4) are of different sizes.

2. Self-igniting internal combustion engine according to claim 1, **characterised in that** the injection openings (12, 13) are directed with the different opening cross-sections at regions of the piston cavity (14) in which depths (T1, T2) of the piston cavity (14) are of different sizes.

3. Self-igniting internal combustion engine according to any one of the preceding claims, **characterised in that** the injector (11) has a plurality of pairs of injection openings (12, 13), which each comprise one injection opening (12) with a larger opening cross-section and one injection opening (13) with a smaller opening cross-section, wherein the injection openings (12) with the larger opening cross-section and the injection openings (13) with the smaller opening cross-section alternate.

4. Self-igniting internal combustion engine according to claim 3, **characterised in that** the injection openings (12) with the larger opening cross-section are directed at regions of the piston cavity (14) with a larger flow cross-section, and **in that** the injection openings (13) with the smaller opening cross-section are directed at regions of the piston cavity (14) with a smaller flow cross-section.

5. Self-igniting internal combustion engine according to any one of the preceding claims, **characterised in that** the piston cavity (14) is not rotationally symmetrical in relation to a longitudinal centre line (4) of the cylinder (2) and the piston (3).

6. Self-igniting internal combustion engine according to any one of the preceding claims, **characterised in that** the piston cavity (14) has a plurality of planes of symmetry (17, 18, 19, 20), the number of which corresponds to the number of pairs of injection openings (12, 13), and **in that** the flow cross-sections of the piston cavity (14) each have a maximum or a minimum in the planes of symmetry (17, 18, 19, 20) and decrease or increase from there until the adjacent plane of symmetry (19, 20, 17, 18).

7. Self-igniting internal combustion engine according to any one of the preceding claims, **characterised in that** the piston cavity (14) has a convex curved outer circumference (16) with different radii of curvature (R1, R2), wherein the radii of curvature (R2) in the regions with larger flow cross-sections are smaller than the radii of curvature (R1) in the regions with smaller flow cross-sections.

8. Self-igniting internal combustion engine according to any one of the preceding claims, **characterised in that** the piston cavity (14) has an outer circumference (16) without discontinuities.

9. Self-igniting internal combustion engine according to any one of the preceding claims, **characterised in that** the piston cavity (14) has a bowl-shaped cross-section with an enlarged stomach section (21) and a narrowed neck section (22) between the stomach section (21) and a transition of the piston cavity (14) into a flat front surface (15) of the piston (3).

10. Self-igniting internal combustion engine according to any one of the preceding claims, **characterised by** a generally pyramid-shaped projection (24) protruding, in the middle of the piston cavity (14), upwards above a bottom (23) of the piston cavity (14) with rounded corners and a rounded tip.

## Revendications

1. Moteur à combustion à allumage par compression avec au moins un cylindre (2) et un piston (3), qui est mobile en va-et-vient dans le cylindre (2), qui délimite une chambre de combustion (6) avec le cylindre (2) et qui comporte une cavité de piston (14) du côté de la chambre de combustion (2), laquelle cavité de piston a des sections de passage qui varient dans une direction circonférentielle du cylindre (2) et du piston (3), ainsi qu'avec un injecteur (11) agencé au centre au-dessus de la cavité de piston (14) en vue de l'injection de carburant dans la cavité de piston (14), lequel injecteur comporte plusieurs orifices d'injection (12, 13), au moins une partie des orifices d'injection (12, 13) ayant des sections transversales d'orifice différentes et les orifices d'injection (12, 13) avec les sections transversales d'orifice différentes étant dirigés sur des zones de la cavité de chambre de combustion (14) avec des sections de passage différentes, **caractérisé en ce que** les orifices d'injection (12, 13) avec les sections transversales d'orifice différentes sont dirigés sur des zones de la cavité de piston (14) dans lesquelles des distances (D1, D2) entre une circonférence extérieure (16) de la cavité de piston (14) et un axe central longitudinal (4) du cylindre (2) et du piston (4) sont différentes.

2. Moteur à combustion à allumage par compression selon la revendication 1, **caractérisé en ce que** les orifices d'injection (12, 13) avec les sections transversales d'orifice différentes sont dirigés sur des zones de la cavité de piston (14) dans lesquelles des profondeurs (T1, T2) de la cavité de piston (14) sont différentes.

3. Moteur à combustion à allumage par compression selon l'une des revendications précédentes, **caractérisé en ce que** l'injecteur (11) comporte plusieurs paires d'orifices d'injection (12, 13) qui comprennent à chaque fois un orifice d'injection (12) avec une section transversale d'orifice plus grande et un orifice d'injection (13) avec une section transversale d'orifice plus petite, les orifices d'injection (12) avec une section transversale d'orifice plus grande et les orifices d'injection (13) avec une section transversale d'orifice plus petite étant alternés.

4. Moteur à combustion allumage par compression selon la revendication 3, **caractérisé en ce que** les orifices d'injection (12) avec la section transversale d'orifice plus grande sont dirigés sur des zones de la cavité de piston (14) avec une section de passage plus grande et **en ce que** les orifices d'injection (13) avec la section transversale d'orifice plus petite sont dirigés sur des zones de la cavité de piston (14) avec une section de passage plus petite.

5. Moteur à combustion à allumage par compression selon l'une des revendications précédentes, **caractérisé en ce que** la cavité de piston (14) n'est pas symétrique en rotation par rapport à un axe central longitudinal (4) du cylindre (2) et du piston (3).

6. Moteur à combustion à allumage par compression selon l'une des revendications précédentes, **caractérisé en ce que** la cavité de piston (14) a plusieurs plans de symétrie (17, 18, 19, 20) dont le nombre correspond au nombre des paires d'orifices d'injection (12, 13) et **en ce que** les sections de passage de la cavité de piston (14) présentent à chaque fois un maximum ou un minimum dans les plans de symétrie (17, 18, 19, 20) et diminuent ou augmentent à partir de là jusqu'au plan de symétrie (19, 20, 17, 18) voisin.

7. Moteur à combustion à allumage par compression selon l'une des revendications précédentes, **caractérisé en ce que** la cavité de piston (14) a une circonférence extérieure (16) convexe avec différents rayons de courbure (R1, R2), les rayons de courbure (R2) dans les zones de sections de passage plus grandes étant plus petits que les rayons de courbure (R1) dans des zones avec des sections de passage plus petites.

8. Moteur à combustion à allumage par compression selon l'une des revendications précédentes, **caractérisé en ce que** la cavité de piston (14) a une circonférence extérieure (16) sans discontinuité.

9. Moteur à combustion à allumage par compression selon l'une des revendications précédentes, **caractérisé en ce que** la cavité de piston (14) a une section transversale en forme de coupe avec une partie formant ventre (21) élargie et une partie formant col (22) rétrécie entre la partie formant ventre (21) et une embouchure de la cavité de piston (14) dans une surface frontale plane (15) du piston (3).

10. Moteur à combustion à allumage par compression selon l'une des revendications précédentes, **caractérisé par** une partie en saillie (24), avec des angles arrondis et une pointe arrondie, globalement en forme de pyramide et dépassant au centre de la cavité de piston (14) vers le haut au-dessus d'un fond (23) de la cavité de piston (14).
